(19) Europäisches Patentamt

European Patent Office

Office européen des brevets

(11) **EP 1 209 493 A1**

(12) **EUROPEAN PATENT APPLICATION**

(43) Date of publication:
  29.05.2002 Bulletin 2002/22

(51) Int Cl.7: **G02B 6/12**

(21) Application number: **01309812.4**

(22) Date of filing: **22.11.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **24.11.2000 JP 2000358177**<br><br>(71) Applicant: **SHIN-ETSU CHEMICAL CO., LTD.**<br>**Chiyoda-ku Tokyo (JP)** | (72) Inventor: **Makikawa, Shinji**<br>**Annaka-shi, Gunma-ken (JP)**<br><br>(74) Representative: **Cooper, John et al**<br>**Murgitroyd & Company**<br>**165-169 Scotland Street**<br>**Glasgow G5 8PL (GB)**<br><br>Remarks:<br>Amended claims in accordance with Rule 86 (2) EPC. |

(54) **An optical waveguide and a method for producing it**

(57)    There is disclosed a silica optical waveguide which comprises a silicon substrate (2), a lower clad film (3,4) consisting of silica glass formed on the substrate, a core part (6) for propagating light consisting of silica glass formed on the lower clad film, and an upper clad film (7) consisting of silica glass with which the core part is buried, characterized in that the above-mentioned lower clad film comprises two layers of a lower first silica glass clad film (3) formed by thermally oxidizing the silicon substrate and a lower second silica glass clad film (4) consisting of a silica glass deposited film, and a method for producing it. There can be provided an optical waveguide wherein incline or deformation of the core part, warp of a substrate, defects such as a crack or the like are not generated during the high temperature treatment, in order to produce a silica optical waveguide which has excellent circuit characteristics in the reproducibility of optical-waveguide type devices, such as a directional coupler, and a method for producing it.

## FIG. 1

## Description

BACKGROUND OF INVENTION

Field of the Invention

The present invention relates to an optical waveguide wherein generation of defects, such as heat deformation of a lower clad film and a core film, warp of a substrate, and a crack or the like in manufacture of a silica optical-waveguide type device for optical communication are suppressed, and a method for producing it.

Description of the Related Art

In a high speed and high density optical-communication device, there is a need for an optical part with high reliability and lower cost. Many optical-waveguide type devices fabricated on a substrate as the optical part are especially used in recent years, and a silica optical waveguide which can be easily connected with a fiber is especially noted among them.

A directional coupler will be explained below as an example of a conventional optical-waveguide type device.

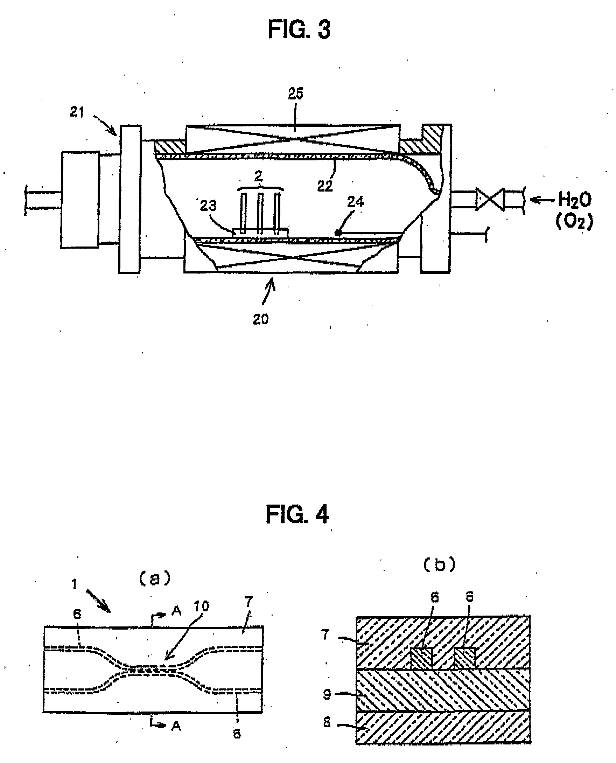

Two core parts 6, 6 which constitute an optical waveguide are buried close to each other at an interval of several micrometers between a lower clad film 9 and an upper clad film 7 formed on a substrate 8, to form an optical coupling part 10, as shown in Fig. 4 (a) and (b). This directional coupler 1 is a basic circuit of a waveguide type optical circuit, and is widely used for an optical branching part, an optical multiplex part or the like.

In order to produce such an optical waveguide, there are a method wherein silicon tetrachloride is subjected to hydrolysis reaction in an oxyhydrogen flame to deposit a silica glass film on a substrate (hereinafter referred to as FHD method), and a method wherein a silicon tetrachloride is similarly reacted in plasma or in an atmosphere containing ozone to deposit a silica glass film (hereinafter referred to as CVD method) and the like.

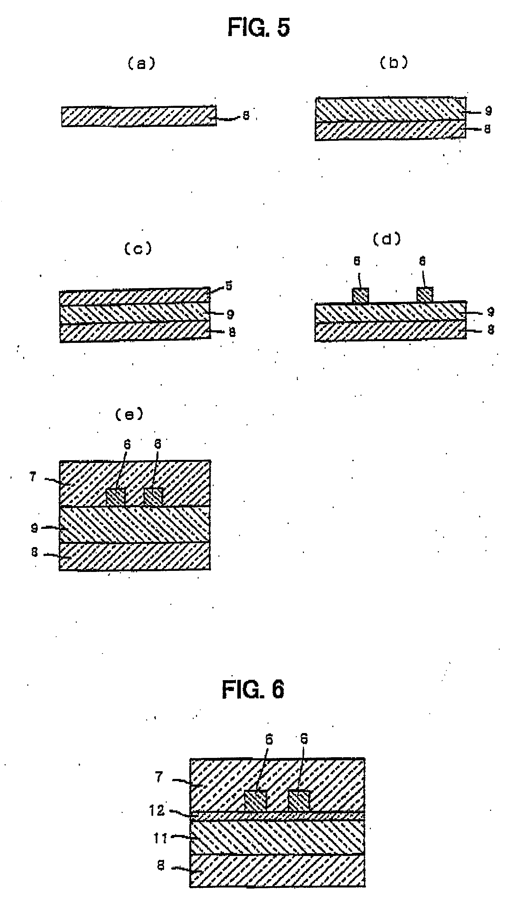

Hereafter, an example of conventional methods for producing an optical waveguide is explained with referring to Fig. 4 and Fig. 5.

According to the FHD method, a lower clad film 9 (Fig. 5 (b))is formed by forming a porous silica deposited film on a substrate 8 shown in Fig. 5 (a) with using phosphorus trichloride, boron trichloride or the like, in addition to a silicon tetrachloride as a starting raw material, and the deposited film is subjected to high temperature treatment comprising heating and keeping at 1000°C or more to achieve sintering vitrification. A silicon substrate, a silica glass substrate and the like are used as the substrate 8.

According to CVD method, a lower clad film 9 is formed by forming a transparent silica deposited film on a substrate 8 with using an organic silicon compound such as tetraethoxysilane or the like, silicon tetrachloride, or the like as a starting raw material, and then heating and keeping the deposited film at 800 °C or more to dissociate carbon compounds, hydroxyl groups or the like contained in the film. Thereby, a silica glass film with high purity can be produced.

The core film 5 (Fig. 5 (c)) can be produced by reacting an additive which can make an refractive index higher than the lower clad film 9, for example, the compound containing Ge and Ti, together with a silicon compound according to the above-mentioned FHD method, CVD method, or a vacuum deposition method using electron ray.

Then, an unnecessary part of the core film 5 other than the two core parts 6,6 for propagating light is removed according to a reactive ion etching method (Fig. 5 (d)), subsequently the upper clad film 7 is deposited according to the FHD method or the CVD method so that the core parts 6,6 should be covered, and then the upper clad film 7 is treated at high temperature. Thereby, a directional coupler (Fig. 5 (e)) can be obtained.

Since the coupling characteristics of the directional coupler 1 shown in Fig. 4 (a) and (b) are greatly dependent on an interval of the two core parts 6,6, it is desirable to manufacture so that the interval may be accurate and may not be changed depending on a process.

In the conventional FHD method, since clad films 7 and 9 and a core film 5 are deposited as a porous glass, it is necessary to conduct sintering vitrification by subjecting them to high temperature treatment at 1000 °C or more. However, there has been a problem that the lower clad film 9, the two core parts 6,6 and the upper clad film 7 which have been softened flow and are mixed during the high temperature treatment.

Accordingly, when a sintering vitrification process of the core film 5 and the upper clad film 7 is performed, softening of the lower clad film 9 or softening of the core parts 6,6 has been suppressed by lowering sintering vitrification temperature in order of the lower clad film 9, the core film 5, and the upper clad film 7. However, there is a limit in the range of lowering the sintering vitrification temperature, which is only about 200 °C at most. Accordingly, fluidization with softening has not been able to be prevented completely.

Moreover, since both the FHD method and the CVD method are a method wherein a silica film is newly deposited on a substrate 8, in the case that a silicon substrate having a larger thermal expansion than a silica film is used as a substrate 8, the substrate 8 with the silica film will warp greatly by performing high temperature treatment. For example, if a silica film of 20 μm is deposited on a silicon substrate (with a diameter of 4 inches and a thickness of 1 mm), warp of about 200 μm will be generated by the heat treatment at 1200°C. Therefore, there has been the following problem. The core parts 6,6 worked into a rectangular shape are apt to be affected by heat due to influence of the warp, and they are inclined due to softening, fused a little and becomes circular, or inclined due to the warp of the substrate, when buried with the upper clad film 7.

For this reason, there was disclosed in Japanese Patent No.3070018 a method for suppressing generation of defects such as these deformation, warp or the like, comprising a lower clad film having a two-layer structure of, from a substrate side in order, the first lower clad film 11 of the silica film containing an additive formed by the FHD method and the second lower clad film 12 consisting of a pure silica film thereon as shown in Fig. 6.

However, even in the method, the first lower clad film 11 is somewhat softened during the high temperature vitrification treatment. Furthermore, since the second lower clad film 12 is a pure silica film (deposited film) obtained by a sputtering method or a CVD method, the property of the glass film is porous and it is not so good, and thus it needs high temperature treatment. At that time, it is softened somewhat. Moreover, since both the first lower clad film 11 and the second lower clad film 12 are deposited films, they are warped together with a substrate due to the high temperature treatment.

SUMMARY OF THE INVENTION

The present invention has been accomplished to solve the above-mentioned previous problems. An object of the present invention is to provide an optical waveguide wherein defects, such as incline or deformation of the core part, warp of a substrate, a crack or the like are not generated during the high temperature treatment, in order to produce a silica optical waveguide which has excellent circuit characteristics in the reproducibility of optical-waveguide type devices, such as a directional coupler, and a method for producing it.

To achieve the above mentioned object, the present invention provides a silica optical waveguide which comprises a silicon substrate, a lower clad film consisting of silica glass formed on the substrate, a core part for propagating light consisting of silica glass formed on the above-mentioned lower clad film, and an upper clad film consisting of silica glass with which the above-mentioned core part is buried, characterized in that the above-mentioned lower clad film comprises two layers of a lower first silica glass clad film formed by thermally oxidizing the silicon substrate and a lower second silica glass clad film consisting of a silica glass deposited film.

As described above, if the above-mentioned lower clad film has the two-layer structure of the lower first silica glass clad film consisting of an oxide film (SiO$_2$) formed by thermally oxidizing silicon (Si) substrate in an oxidizing atmosphere and the lower second silica glass clad film produced thereon not by the above-mentioned thermal oxidation method but by a deposition method, deformation, warp, a crack, or the like is hardly caused even when it is subjected to high temperature treatment for sintering vitrification of the core film and the upper clad film formed on it by a deposition method.

Namely, since the lower first silica glass clad film formed by the thermal oxidation is a film formed as a result that silicon itself is oxidized to become a silica film, it is not a film in which the additive or the like is doped, but is a pure silica film. Moreover, the thermal oxide film has a higher density of glass compared with other glass deposited films. As a refractive index depends on a density, the refractive index of the glass film obtained by the thermal oxidation method is large as 1.4580-1.4590, whereas a refractive index of the glass deposited film obtained by a direct vapor phase synthetic method is 1.4578. Since the refractive index becomes large with the temperature at which oxidizing is performed, density of the formed glass becomes larger with higher oxidation temperature, and as a result, the hard glass which does not almost have flowability is formed. Moreover, since the back surface is also oxidized together with the front surface on which a circuit is formed on a silicon substrate, there can be obtained a very high quality silica optical waveguide wherein a substrate is hardly warped either during thermal oxidation process or after formation of the oxide film.

In this case, it is desirable that a thickness of the lower first silica glass clad film is 5 μm or more.

As described above, if a thickness of the lower first clad film is 5 μm or more, deformation, warp, crack or the like is hardly generated, even in the case that the lower second clad film, the core film and the upper clad film are formed by the deposition method, and each of them is subjected to high temperature treatment. Therefore, the optical waveguide having excellent circuit characteristics can be obtained.

A method for producing an optical waveguide of the present invention is a method for producing a silica optical waveguide which comprises a silicon substrate, a lower clad film consisting of silica glass formed on the substrate, a core part for propagating light consisting of silica glass formed on the above-mentioned lower clad film, and an upper clad film consisting of silica glass with which the above-mentioned core part is buried,
characterized in that it comprises forming a lower first silica glass clad film by oxidizing a surface of the above-mentioned silicon substrate by the thermal oxidation method, forming a lower second silica glass clad film by depositing a silica glass film on this lower first silica glass film, and then forming a core part by depositing a core film on the lower clad film and removing an unnecessary part, and subsequently forming the upper clad film which covers the lower clad film and the core part.

As described above, the silica optical waveguide which has substantially no defects, such as deformation, warp, crack or the like can be produced by achieving silica vitrification of the surface of the silicon substrate by the thermal oxidation method to form the lower first silica glass clad film, and depositing the silica glass film on this lower first silica glass film to form the lower second silica glass clad film.

In this case, it is desirable that the oxidation temperature in the thermal oxidation method is 1100 °C or more.

In the thermal oxide film formed by the thermal oxidation method, since a density of the silica glass is larger compared with other glass deposited films, and a refractive index depending on a density varies a lot with oxidation temperature, higher oxidation temperature results in a larger density of the silica glass, and thus hard glass with little flowability can be formed. Therefore, an oxidation temperature of 1100°C or more is effective.

In that case, it is desirable that a method for forming a silica glass deposited film is chosen from a FHD method, a CVD method, and a sputtering method.

In the present invention, since silica glass films other than the lower first silica glass clad film can attain the purpose enough even when they are silica glass deposited films. Thus, the deposited film formed by the FHD method, the CVD method and the sputtering method described above can be subjected to high temperature treatment to be vitrified.

As described above, according to the present invention, there can be produced a silica optical waveguide which comprises a silicon substrate, a lower clad film consisting of silica glass formed on the substrate, a core part for propagating light consisting of silica glass formed on the lower clad film, and an upper clad film consisting of silica glass with which the core part is buried,

characterized in that the lower clad film comprises two layers of a lower first silica glass clad film formed by thermally oxidizing a silicon substrate and a lower second silica glass clad film consisting of a silica glass deposited film. Thereby, it has been made possible to suppress heat deformation of the lower clad film, and to reduce the warp of the whole substrate. Furthermore, since the lower second clad film which is adaptable to a lower clad film and a core film is produced, it becomes possible to prevent cracks at an optical-waveguide form part, such as a core part or the like. Therefore, a high quality silica optical waveguide can be produced.

BRIEF DESCRIPTION OF THE DRAWINGS

Fig. 1 is a conceptual diagram showing an example of a directional coupler which is one of the optical waveguide type device of the present invention. (a) a plan view of the directional coupler, (b) the A-A line sectional view of (a).
Fig. 2 (a) to (f) is a flow diagram showing one example of the processes of the method for production of the present invention.

Fig.3 is an example of a thermal oxidation apparatus used for a thermal oxidation method.
Fig.4 is a conceptual diagram showing an example of a conventional directional coupler.
(a) a plan view of the directional coupler, (b) the A-A line sectional view of (a).
Fig. 5 (a) to (e) is a flow diagram showing one example of a conventional method for production.
Fig. 6 is a view showing another embodiment of conventional one.

DESCRIPTION OF THE INVENTION AND EMBODIMENT

The present invention will now be explained in detail.

The inventors of the present invention thought out that it is necessary to increase a density of a lower clad film on a substrate first and contact it close to a substrate, in order to avoid generation of incline of the core part, deformation, warp of a substrate, a crack or the like during manufacturing process of a silica optical waveguide, scrutinized conditions for forming silica glass film with high density, and completed the present invention.

Namely, the present invention relates to a method for producing a silica optical waveguide which comprises a silicon substrate, a lower clad film consisting of silica glass formed on the substrate, a core part for propagating light consisting of silica glass formed on the above-mentioned lower clad film, and an upper clad film consisting of silica glass with which the above-mentioned core part is buried, characterized in that it comprises forming a lower first silica glass clad film by oxidizing a surface of the above-mentioned silicon substrate according to a thermal oxidation method, forming a lower second silica glass clad film by depositing a silica glass film on the lower first silica glass film, then forming a core part by depositing a core film on the lower clad film and removing an unnecessary part according to a reactive ion etching method or the like, and subsequently forming the upper clad film which covers the lower clad film and the core part.

As described above, a silica film can also be formed on a silicon substrate by thermally oxidizing the silicon substrate. Since silicon itself is oxidized to be a silica film, according to the method, there can be obtained a pure silica film with a high density instead of the film in which the additive or the like is doped. Moreover, since the surface of the whole substrate is oxidized together with the front surface on which a circuit is formed on the silicon substrate, namely a back surface is also oxidized, the substrate does not warp either during the oxidation process or after the process, differently from the case that the glass film is deposited on only one side.

As described above, it is effective to use the silica film obtained by thermal oxidation as a lower clad film on the substrate. The thermal oxidation silica film with a thickness of 5-30 μm used for an optical waveguide can be formed by performing a thermal oxidation reaction comprising exposing it to a water vapor atmosphere at 1100 °C or higher for a long time.

The thermal oxide film has a higher density of the glass compared with other glass deposited films as described above. As for the refractive index depending on a density, the refractive index of the glass film obtained by the thermal oxidation method is large as 1.4580-1.4590, whereas the refractive index of the glass film obtained by the direct vapor phase synthetic method (the deposition method) is 1.4578, as measured with a prism coupling method. Moreover, since the refractive index gets larger depending on the oxidation temperature, the density of the formed glass gets higher with increase of the oxidation temperature, and therefore hard glass with little flowability is formed.

However, when only the glass film obtained by thermal oxidation is used as the above-mentioned lower clad film, and the glass film produced by other deposition methods is used as a core film and an upper clad film, and the films are subjected to heat treatment at high temperature, there happens a phenomenon that glasses at an interface between the lower clad film and the core film or the upper clad film are not adaptable each other, and cracks of several μm is caused in the core film or the upper clad film at the interface, since the flowability of the lower clad film which formed by a thermal oxidation method is low, differently from the conventional case where all the films are formed by a deposition method.

Therefore, when a thermal oxide film is used as a lower clad film, in order to give adaptability to the core film and the upper clad film which are a glass film produced by a deposition method, it is necessary to form the lower second clad film with some flowability on an oxide film (the lower first silica glass film). The lower second clad film with some flowability can be formed by a method of depositing in addition to a thermal oxidation method, for example, the FHD method, the CVD method, a sputtering method, or a vapor deposition method.

In addition, it is better to set the refractive index of the lower second clad film to be the same as the refractive index of the lower first clad film, if possible. Thickness of the lower second clad film necessary for adaptability to the core film and the upper clad film may be several μm to about 10 μm. If it is thicker, there is a possibility that the flowability of the lower second clad film for adaptability may induce incline and deformation of the core part and an upper clad film to the contrary.

If the thermal oxide film used for the lower first clad film is oxidized at a temperature near a sintering vitrification temperature of a core film and an upper clad film, flowability becomes smaller than the glass of the core film and the upper clad film. Accordingly, the oxidation temperature is preferably higher than the usual sintering vitrification temperature of the core film and the upper clad film or a temperature higher than those annealing temperatures, namely 1100°C or higher. However, if the oxidation temperature is too high, defects such as slip or the like will be generated easily in a silicon substrate. Accordingly, it is desirable to be 1300 °C or lower. Moreover, since a thickness of a lower clad film is generally 5 - 30 μm, a thickness of a thermal oxide film as the lower first clad film is desirably 5 - 20 μm.

The embodiments of the present invention will now be described with referring to the drawings. However, the invention is not limited thereto.

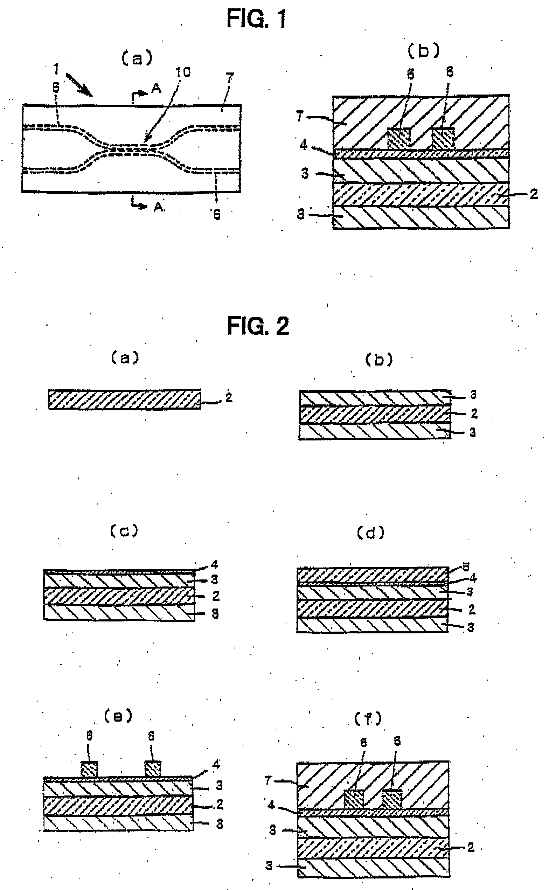

A conceptual plan view of a directional coupler as an example of the silica optical-waveguide type device of the present invention, and a A-A line sectional view are shown in (a) and (b) of Fig. 1.

In the directional coupler 1, thermal oxide films 3,3 is formed on the front surface and the back surface of a silicon substrate 2. The oxide film on the front side is a lower first clad film, and the lower second clad film 4 is formed thereon. Two core parts 6,6 buried with an upper clad film 7 are formed on the lower second clad film 4. The core parts 6,6 have an optical propagation action, and are close to each other at the central part to form an optical coupling part 10.

Processes for producing the directional coupler will be explained with reference to Fig. 2 and Fig. 3 (since the drawing is used in order to explain the concept, dimensions such as thickness of each film in a cross section or the like are not always the same as actual dimensions).

Fig. 2 (a) shows the silicon substrate 2 used as a starting material.

Fig. 2 (b) shows a thermal oxidation process, in which the surface of a silicon substrate 2 is oxidized according to the thermal oxidation method using a thermal oxidation furnace 20 shown in Fig. 3 to be silica-vitrified, and thereby the lower first silica glass clad films 3,3 are formed in both sides of the substrate.

A thermal oxidation apparatus 20 is Kanthal heater tubular furnace 21 which can heat at 1000 °C or more, the furnace tube 22 made of quartz, silicon carbide or the like is arranged therein, and the boat 23 made of quartz or silicon carbide is arranged therein, and silicon substrates 2 are set there. Oxidizing gas such as water vapor with high purity or the like is introduced from the end of the furnace tube 22, and a temperature of the heater 25 is increased so that the temperature in the furnace tube 22 may become, for example, 1100-1250 °C as measured by a temperature sensor 24 consisting of a thermocouple. By introducing the oxidizing gas with maintaining the temperature, the surface of the silicon substrate 2 is oxidized by active oxygen generated by decomposition of water vapor or the like as shown by the following formula:

$$Si + O_2 \rightarrow SiO_2,$$

and a pure silica glass film with a high density is formed on whole surface of the silicon substrate 2.

Next, as the lower second clad film 4, a porous silica film having a composition of $SiO_2$-$P_2O_5$-$B_2O_3$ is deposited on the lower first clad film 3 according to the FHD method, and subjected to high temperature treatment for sintering vitrification (Fig. 2(c)). The FHD method is a method wherein phosphorus trichloride, boron trichloride, or the like is used in addition to silicon tetrachloride as a starting raw material, and they are hydrolyzed and reacted in an oxyhydrogen flame, to deposit a porous silica film on a substrate or the like.

Even when the lower second clad film 4 is formed by deposition according to the CVD method or a sputtering method, besides the FHD method, the film having the same function can be formed. Namely, tetraethoxysilane and a mixed gas of oxygen and argon can be made plasma with high frequency electric power, and the reacted compound can be deposited according to the CVD method on the silicon substrate 2 heated at about 200 °C on which the lower first clad film 3 is formed. Moreover, the lower second clad film may be deposited from a target on the substrate on which the lower first clad film 3 is formed, by using a mixed gas of argon gas and oxygen as a sputtering gas and a pure silica board as the target and applying high frequency electric power.

Next, to form a core film 5, silica glass having a composition of $SiO_2$-$P_2O_5$-$B_2O_3$-$GeO_2$ is deposited according to the above-mentioned FHD method, and subjected to high temperature treatment for sintering vitrification (Fig. 2(d)). Deposition of this core film 5 may also be carried out according to the above-mentioned CVD method, the sputtering method, or the like.

Subsequently, an unnecessary portion of the core films is removed by a reactive ion etching method or the like, and thereby the core parts 6,6 are formed (Fig. 2 (e)). Then, a silica glass film having a composition of $SiO_2$-$P_2O_5$-$B_2O_3$ is deposited so that the core parts 6,6 may be buried therewith according to the FHD method to form an upper clad film 7, which is then subjected to high temperature treatment for sintering vitrification, and thereby a directional coupler can be obtained (Fig. 2(f)).

The silica optical-waveguide circuit produced in the process described above has no deformation of the core parts 6,6, the lower first clad film 3 and the lower second clad film 4 generated in the optical coupling part 10, and has no crack generated in interfaces between the lower clad film, the core parts 6,6 and the upper clad film 7. Furthermore, it has little warp as a whole and has high quality.

[Example]

The following example is being submitted to further explain the present invention. The example are not intended to limit the scope of the present invention.

(Example)

The directional coupler was produced as an example of a silica optical-waveguide type device. The method for producing this directional coupler was performed in order of the processes shown in the abovementioned Fig. 2 (a) to (f).

The silicon substrate with a diameter of 4 inches and a thickness of 1 mm was prepared as a starting material.

First, the silicon substrate was thermally oxidized by using a thermal oxidation apparatus showed in Fig. 3 with increasing a temperature of a furnace tube to 1100-1250 °C and introducing water vapor as an oxidizing gas, to form a pure silica film on the both surfaces of the front surface and the back surface of the silicon substrate as the lower first silica glass clad film. The film thickness of about 10 μm can be obtained when it is oxidized at a temperature of 1200 °C for about 100 hours. The warp of the silicon substrate on which the oxide film of 10 μm thickness was formed was very small as 3 μm. The refractive index of the above-mentioned silica film measured with the Metricon apparatus manufactred by Seki Technotoron corporation was high as 1.4588, and the density was high.

Next, a silica film having a composition of $SiO_2$-$P_2O_3$-$B_2O_3$ and a thickness of 5 μm was deposited according to FHD method as the lower second clad film, with determining an amount of a dopant so that an refractive index thereof may be 1.4580, and subjected to high temperature treatment to be vitrified. The sintering vitrification was conducted at a temperature of 1200 °C in a helium gas atmosphere. The warp of the silicon substrate on which the lower first and the lower second clad films were formed was 30 μm.

Subsequently, after a silica porous glass film having a composition of $SiO_2$-$P_2O_5$-$B_2O_3$-$GeO_2$ and a thickness of about 7 μm was deposited as a core film according to the FHD method, the sintering vitrification was carried out. The sintering vitrification temperature was 1150 °C.

Then, an unnecessary part of the core film was removed by a reactive ion etching method, and thereby the two core parts were formed. Then, a silica porousglass film of 20 μm having a compostion of $SiO_2$-$P_2O_5$-$B_2O_3$ was deposited as an upper clad film so that the core part may be buried therewith according to the FHD method, and subjected to sintering vitrification at 1050 °C, and thereby a directional coupler was obtained.

The core part of the optical-waveguide circuit of the directional coupler thus produced had a size of 7 x 7 μm and a difference of the specific refractive index was 0.75%. In the optical coupling part, there was no generation of deformation of the core part, the lower first clad film and the lower second clad film, and the crack was not generated in the interface between the core part and the upper clad film.

Moreover, the warp of the whole substrate after formation of the waveguide was 200 μm. This was smaller than 300 μm of the warp generated after a lower clad film, a core film and an upper clad film were deposited according to the FHD method so that the thickness of each film may be the same as above, and the same waveguide circuit as the above was formed. Therefore, the high quality silica optical waveguide wherein the warp was small, accuracy of the interval in the core part was high could be produced.

The present invention is not limited to the above-described embodiment. The above-described embodiment is a mere example, and those having substantially the same structure as that described in the appended claims and providing the similar action and effects are all included in the scope of the present invention.

For example, in the above-mentioned embodiment, although one example wherein the core part having a size of 7x7 μm was formed on the silicon substrate with a diameter of 4 inches was explained, the present invention is not limited thereto, but can also be applied to the silica optical waveguide which having any diameter of the substrate, any core part size, and any specific refractive index. Moreover, an optical waveguide produced is not limited to a directional coupler.

## Claims

1. A silica optical waveguide which comprises a silicon substrate, a lower clad film consisting of silica glass formed on the substrate, a core part for propagating light consisting of silica glass formed on the lower clad film, and an upper clad film consisting of silica glass with which the core part is buried, **characterized in that** the lower clad film comprises two layers of a lower first silica glass clad film formed by thermally oxidizing the silicon substrate and a lower second silica glass clad film consisting of a silica glass deposited film.

2. The optical waveguide according to Claim 1 **characterized in that** a thickness of the lower first silica glass clad film is 5 μm or more.

3. A method for producing a silica optical waveguide which comprises a silicon substrate, a lower clad film consisting of silica glass formed on the substrate, a core part for propagating light consisting of silica glass formed on the lower clad film, and an upper clad film consisting of silica glass with which the core part is buried, **characterized in that** it comprises forming a lower first silica glass clad film by oxidizing a surface of the silicon substrate by a thermal oxidation method, forming a lower second silica glass clad film by depositing a silica glass film on the lower first silica glass film, and then forming the core part by depositing a core film on the lower clad film and removing an unnecessary part, and subsequently forming the upper clad film which covers the lower clad film and the core part.

4. The method for producing an optical waveguide according to Claim 3 **characterized in that** an oxidation temperature in the thermal oxidation method is 1100 °C or more.

5. The method for producing an optical waveguide according to Claim 3 or 4 **characterized in that** a method for forming the silica glass deposited film is chosen from a FHD method, a CVD method, and a sputtering method.

**Amended claims in accordance with Rule 86(2) EPC.**

**1.** A silica optical waveguide which comprises a silicon substrate, a lower clad film consisting of silica glass formed on the substrate, a core part for propagating light consisting of silica glass formed on the lower clad film, and an upper clad film consisting of silica glass with which the core part is buried; **characterised in that** the lower clad film comprises (a) a lower first silica glass clad film formed by thermally oxidizing the silicon substrate and (b) a lower second silica glass clad film consisting of a silica glass deposited film, and said lower first silica glass clad film is formed on both sides of the silicon substrate.

**2.** The optical waveguide according to claim 1, **characterised in that** a thickness of the lower first silica glass clad film is 5μ or more.

**3.** A method for producing a silica optical waveguide which comprises a silicon substrate, a lower clad film consisting of silica glass formed on the substrate, a core part for propagating light consisting of silica glass formed on the lower clad film, and an upper clad film consisting of silica glass with which the core part is buried; the method being **characterised by** forming a lower first silica glass clad film on the whole surface of the silicon substrate by oxidizing the silicon substrate by a thermal oxidation method, forming a lower second silica glass clad film by depositing a silica glass film on the lower first silica glass film formed on a front surface of the silicon substrate, whereby the lower second silica glass clad film together with the lower first silica glass film form the lower clad film, and then forming the core part by depositing a core film on the lower clad film and removing an unnecessary part, and subsequently forming the upper clad film which covers the lower clad film and the core part.

**4.** The method for producing a silica optical waveguide according to claim 3 **characterised in**

**that** an oxidation temperature in the thermal oxidation method is 1100°C or more.

**5.** The method for producing a silica optical waveguide according to claim 3 or claim 4 **characterised in that** a method for forming the silica glass deposited film is chosen from a FHD method, a CVD method and a sputtering method.

## FIG. 1

(a)

(b)

## FIG. 2

(a)

(b)

(c)

(d)

(e)

(f)

## FIG. 3

## FIG. 4

(a)

(b)

# FIG. 5

(a)

(b)

(c)

(d)

(e)

# FIG. 6

**European Patent Office**

**EUROPEAN SEARCH REPORT**

Application Number

EP 01 30 9812

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int.Cl.7) |
| X | GB 2 346 452 A (UNIV GLASGOW) 9 August 2000 (2000-08-09) * page 5, line 16 - page 13, line 9; figures 2A-E * | 1-5 | G02B6/12 |
| A | EP 0 535 861 A (AMERICAN TELEPHONE & TELEGRAPH) 7 April 1993 (1993-04-07) * the whole document * | 1-4 | |
| A | US 4 896 930 A (YAMADA KAZUJI ET AL) 30 January 1990 (1990-01-30) * column 2, line 30 - column 3, line 68 * | 3,4 | |
| A | PATENT ABSTRACTS OF JAPAN vol. 011, no. 342 (P-635), 10 November 1987 (1987-11-10) & JP 62 124511 A (NIPPON TELEGR & TELEPH CORP), 5 June 1987 (1987-06-05) * abstract * | 1-5 | |
| A | US 5 431 775 A (PRINCE ERIC T) 11 July 1995 (1995-07-11) * the whole document * | 1,3 | TECHNICAL FIELDS SEARCHED (Int.Cl.7) G02B |

The present search report has been drawn up for all claims

| Place of search | Date of completion of the search | Examiner |
|---|---|---|
| MUNICH | 19 February 2002 | Wolf, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 209 493 A1**

## ANNEX TO THE EUROPEAN SEARCH REPORT
## ON EUROPEAN PATENT APPLICATION NO.

EP 01 30 9812

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2002

| Patent document cited in search report | | | Publication date | Patent family member(s) | | Publication date |
|---|---|---|---|---|---|---|
| GB 2346452 | A | | 09-08-2000 | AU | 2307600 A | 25-08-2000 |
| | | | | EP | 1151332 A1 | 07-11-2001 |
| | | | | WO | 0046618 A1 | 10-08-2000 |
| | | | | GB | 2362963 A | 05-12-2001 |
| EP 0535861 | A | | 07-04-1993 | DE | 69224454 D1 | 26-03-1998 |
| | | | | DE | 69224454 T2 | 30-07-1998 |
| | | | | EP | 0535861 A2 | 07-04-1993 |
| | | | | JP | 5297236 A | 12-11-1993 |
| US 4896930 | A | | 30-01-1990 | JP | 2582066 B2 | 19-02-1997 |
| | | | | JP | 63229433 A | 26-09-1988 |
| | | | | DE | 3809182 A1 | 29-09-1988 |
| | | | | KR | 9612166 B1 | 16-09-1996 |
| JP 62124511 | A | | 05-06-1987 | JP | 2622108 B2 | 18-06-1997 |
| US 5431775 | A | | 11-07-1995 | NONE | | |